# DEMANDE DE BREVET EUROPEEN

(11) **EP 1 281 424 A1**
(43) Date de publication de la demande: **05.02.2003**
(21) Numéro de dépôt: 01810747.4
(22) Date de dépôt: 30.07.2001
(51) Int. Cl.: B01D 17/038, B04C 5/10, B01D 21/26

(54) **Procédé de séparation d'un fluide**

(71) Demandeur: Rochat, Jean-Denis, 1272 Genolier (CH)
(72) Inventeur: Rochat, Jean-Denis, 1272 Genolier (CH)
(74) Mandataire: Savoye, Jean-Paul

(57) **Abrégé**

Selon ce procédé de séparation d'un fluide comprenant des phases de densités différentes ou des particules en suspension, à l'exception du sang et de tout liquide contenant des cellules humaines, on forme un écoulement de ce fluide et on soumet cet écoulement à une transversale (F) à la direction (A) dudit écoulement pour faire sédimenter la phase de densité plus élevée ou les particules et on prélève en continu l'une desdites phases au fur et à mesure qu'elle se forme sur une portion au moins de la longueur dudit écoulement.

## Description

La présente invention se rapporte à un procédé de séparation d'un fluide comprenant des phases de densités différentes ou des particules en suspension, à l'exception du sang et de tout liquide contenant des cellules humaines selon lequel, on forme un écoulement de ce fluide et on soumet cet écoulement à une force transversale à la direction dudit écoulement pour faire sédimenter la phase de densité plus élevée ou les particules.

Il existe de nombreux fluides contenant des particules en suspension dans lesquels on désire effectuer la séparation entre ces particules et la phase fluide, ou des liquides formés de deux phases liquides non miscibles de densités différentes que l'on désire séparer l'une de l'autre. Cette opération s'effectue soit par décantation sous l'effet de la force de gravité, soit sous l'effet de la force centrifuge, par centrifugation de ce fluide ou encore en formant un cyclone. Plus la masse des particules est faible, plus le temps et la longueur des trajectoires de ces particules augmentent et plus la séparation de ces particule devient difficile à obtenir.

On a déjà proposé dans « Stagewise separation to improve continuous centrifugal blood cell separation » The International Journal Of Artificial Organs Vol. 8 no 1, 1985, d'augmenter l'efficacité de la collecte des globules blancs du sang en procédant à une séparation centrifuge continue par étages pour augmenter le rendement de la récupération de ces globules. Un tel procédé suppose l'utilisation d'une pluralité de chambres de séparation disposées en cascade, ce qui n'est pas réalisable du point de vue pratique et économique.

Le but de la présente invention est d'accroître l'efficacité de cette séparation tout en réduisant le temps et la longueur du parcours du fluide le long duquel la séparation s'effectue.

A cet effet, cette invention a pour objet un procédé de séparation d'un fluide tel que le définit la revendication 1.

Grâce à ce procédé, la séparation est plus rapide, ce qui permet de réduire la longueur du canal de séparation et donc la taille du dispositif de séparation. Le rendement des produits récupérés, notamment celui des particules les plus fines, qui sont aussi les plus difficiles à récupérer, est plus élevé. Ce procédé trouve des applications dans de nombreux domaines comme on pourra s'en rendre compte dans la suite de la description.

Le dessin annexé illustre, schématiquement et à titre d'exemple le principe sur lequel est basé le procédé de séparation selon l'invention, ainsi que plusieurs variantes d'application de ce procédé de séparation.

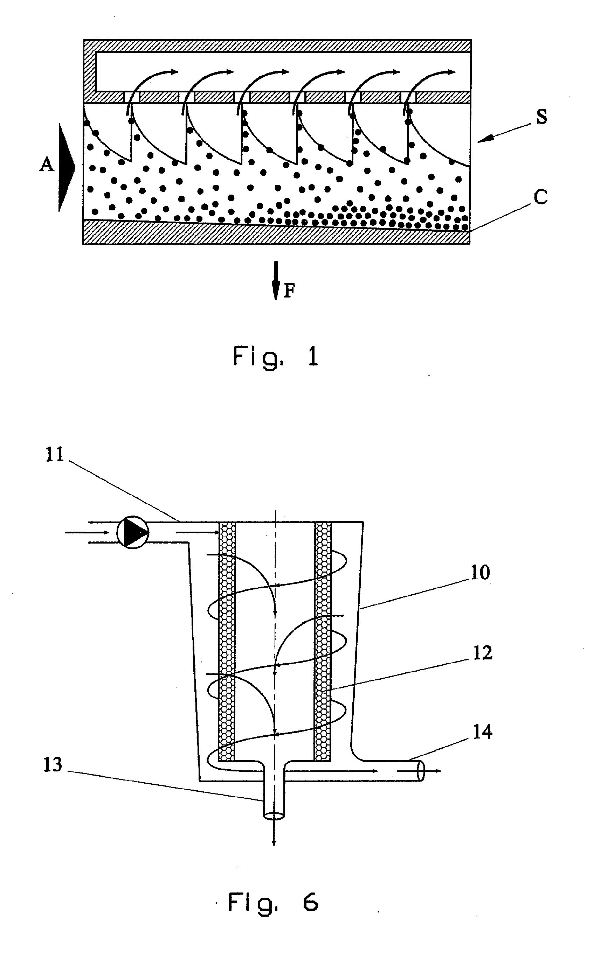

La figure 1 est une vue d'un schéma de principe de ce procédé ;
la figure 2 est un diagramme montrant les trajectoires de sédimentation de particules en suspension ;
la figure 3 est un diagramme montrant la répercussion du procédé sur la trajectoire de sédimentation des particules ;
la figure 4 est une vue en élévation d'une première application de ce procédé ;
la figure 5 est une vue en perspective d'une deuxième application de ce procédé ;
la figure 6 est une vue en élévation d'une troisième application de ce procédé.

Le principe de base du procédé de séparation selon l'invention consiste à former entre deux parois d'un canal de séparation S un écoulement du fluide à séparer selon une direction indiquée par la flèche A et à soumettre cet écoulement à un champ de force F, qui peut être la force de gravitation ou la force centrifuge, de sorte que les particules en suspension ou la phase de densité plus élevée sédimentent. Au fur et à mesure que ces particules sédimentent contre la paroi du canal de séparation C destinée à retenir ces particules, la phase liquide adjacente à la paroi opposée de ce canal de séparation C est prélevée.

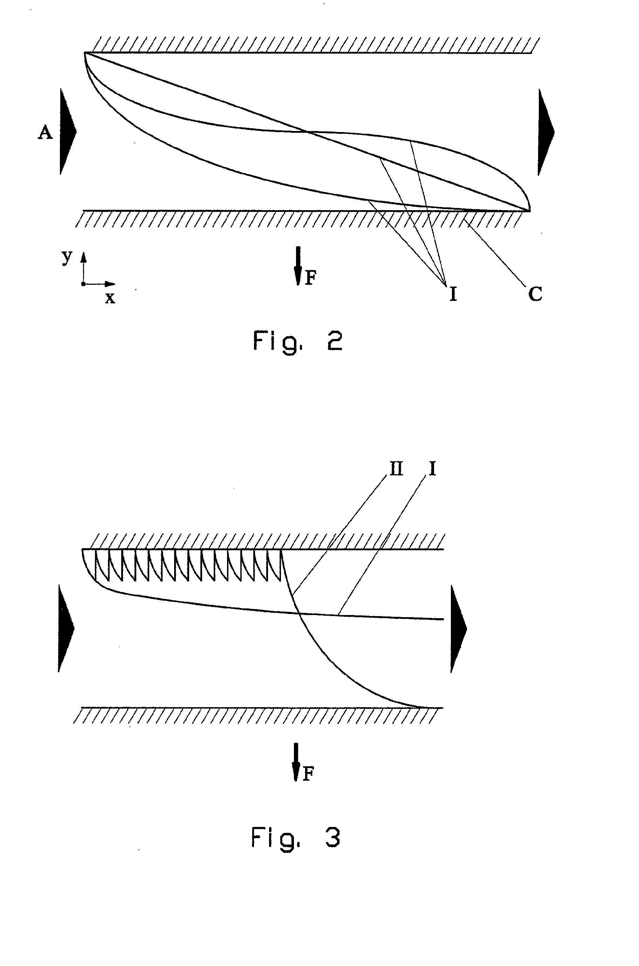

Dans le diagramme de la figure 2, l'épaisseur du canal de séparation C, c'est-à-dire la distance entre les deux parois susmentionnées, qui est transversale à la direction A de l'écoulement, correspond à la coordonnée y, tandis que la coordonnée x correspond à la direction A de l'écoulement. L'écoulement du fluide dans le canal de séparation est supposé être aussi laminaire que possible. Dans ce cas, la trajectoire de sédimentation d'une particule peut avoir une forme correspondant plus ou moins et suivant les cas, à une des courbes illustrées par la figure 2. Si on considère la trajectoire des plus petites particules à séparer du liquide, c'est-à-dire celles qui sédimentent le plus lentement, cette trajectoire définit la limite entre le liquide contenant des particules et celui qui n'en contient pas.

Le procédé selon l'invention consiste à prélever du liquide dans la partie située au-dessous ou à l'intérieur (suivant que l'on utilise la force de gravitation ou la force centrifuge pour effectuer la séparation) de la trajectoire de sédimentation des particules les plus légères, ceci dès le début et au fur et à mesure du processus de séparation. La figure 3 illustre l'influence de ce prélèvement sur la trajectoire de sédimentation des particules, la courbe I correspondant à la trajectoire de sédimentation d'une particule sans prélèvement de la phase liquide, tandis que la courbe II correspond à la trajectoire de cette même particule avec prélèvements répétés de la phase liquide sur une certaine portion de la trajectoire de sédimentation et ceci dès le début du processus de sédimentation. Comme on peut le constater, la longueur de cette trajectoire se trouve très sensiblement raccourcie, diminuant ainsi le temps de sédimentation ainsi que la longueur du canal de séparation nécessaire pour obtenir la sédimentation, permettant ainsi de réduire la taille du dispositif ou de l'installation de séparation. On a également pu constater que la pureté des composants issus de la séparation s'en trouve améliorée.

En effet, ce prélèvement de la phase liquide a trois effet :
- La ligne de séparation entre le liquide pratiquement débarrassé de particules et le reste du liquide se trouve déplacée vers la paroi du canal de séparation opposée à la paroi vers laquelle les particules sédimentent. Cet effet pourrait être un inconvénient si le débit de liquide prélevé n'était pas bien contrôlé, étant donné que des particules pourraient être amenées contre cette paroi à travers laquelle le liquide est prélevé.
- En raison du prélèvement de liquide au fur et à mesure que la séparation s'effectue, le débit de liquide diminue, de sorte que la pente de la trajectoire de sédimentation des particules augmente fortement en aval du prélèvement, réduisant substantiellement le temps ainsi que la longueur de l'écoulement nécessaire pour obtenir la séparation.
- Etant donné qu'à la suite du prélèvement de liquide le débit diminue, la séparation entre le liquide et les particules est rendue plus facile.

Ce procédé est applicable dans tous les cas de séparation en milieu fluide (gaz ou liquide), que ce soit pour séparer des particules en suspension ou pour séparer deux phases de deux liquides non miscibles, de densités différentes.

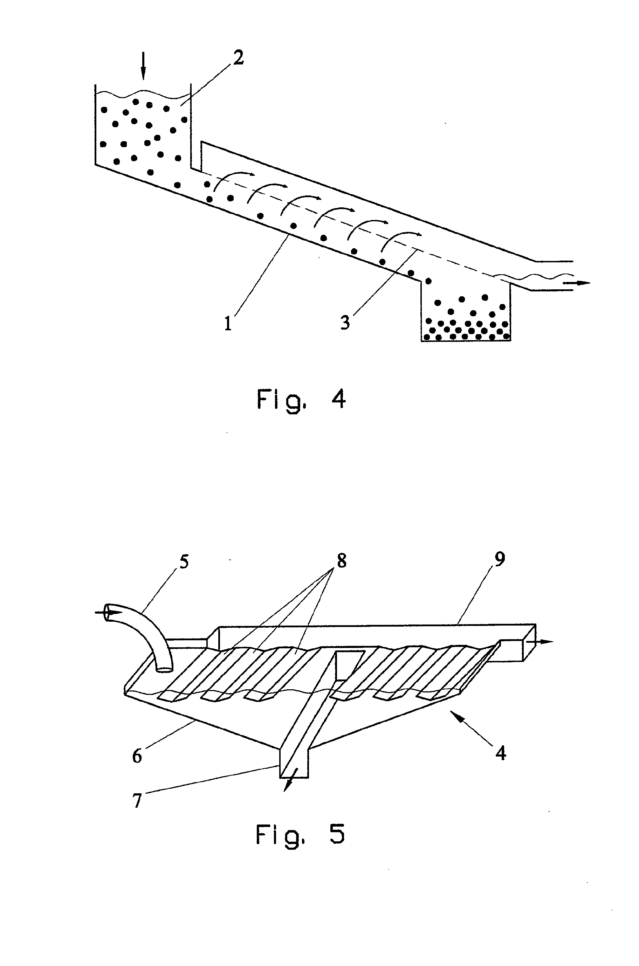

Les exemples illustrés qui seront décrits ci-après mettent tous en oeuvre le principe de séparation selon le procédé décrit. Dans le cas de la figure 4, on forme un écoulement du liquide à séparer le long d'une rampe 1. Le champ de force utilisé pour faire sédimenter les particules contenues dans ce liquide est ici la force de gravitation. L'extrémité amont de la rampe 1 communique avec une colonne 2 du liquide à épurer, dans cet exemple de l'eau usée. La base de la colonne 2 présente une ouverture de communication avec la partie inférieure de la rampe 1 dont la section est divisée par une membrane poreuse 3 ou une paroi percée d'ouvertures multiples sur toute sa longueur.

Au fur et à mesure que le liquide s'écoule le long de la rampe 1, les particules solides sédimentent vers le fond de la rampe 1 sous l'action de la force de gravitation. Etant donné que le liquide se trouve sous une légère surpression due à la colonne 2, l'eau débarrassée des particules solides sort par la membrane poreuse 3 au fur et à mesure que ces particules sédimentent. Cette surpression doit être choisie pour que le débit total de liquide à travers la membrane poreuse 3 évite que les particules solides viennent en contact avec cette membrane 3 et ne risque de la boucher. Si le nombre de particules qui peut venir en contact avec cette membrane 3 est très faible, ces particules ont alors de grandes chances d'être reprises par l'écoulement et de finir par sédimenter.

Au bas de la rampe 1, les boues collectées ne comportent plus qu'une faible proportion de liquide et peuvent alors être amenées au digesteur (non représenté). Ce procédé de séparation permet de réduire considérablement le temps de sédimentation ainsi que la surface utilisée par rapport aux bassins de décantation classiques des stations d'épuration des eaux usées.

Dans la variante de la figure 5, on applique le procédé selon l'invention à un bassin de décantation 4 alimenté en eaux usées par une rampe d'alimentation 5. Le fond du bassin de décantation 4 comporte une rampe 6 qui se termine vers un collecteur de boues 7. Une série de déversoirs 8, formant un réseau de drainage, sont disposés parallèlement à l'extrémité de déversement de la rampe d'alimentation 5, légèrement au-dessous du niveau de liquide dans le bassin de décantation 4. Les fonds de ces déversoirs 8 présentent de légères pentes en direction d'un collecteur d'eau épurée 9 situé à l'extérieur du bassin de décantation 4.

La dernière variante de mise en oeuvre du procédé selon l'invention, illustrée par la figures 6 se rapporte à l'application du procédé selon l'invention au cas de la séparation par cyclone. Dans ce cas, on forme un cyclone dans une enceinte tronconique 10 dans laquelle on entre à l'extrémité supérieure coïncidant avec la grande base du tronc de cône avec un jet tangentiel sous pression 11. Pour permettre de prélever la phase légère tout le long de l'écoulement cyclonique on dispose, concentriquement à l'intérieur de l'enceinte tronconique 10, une paroi tubulaire poreuse 12 fermée à ses deux extrémités axiales et on relie la partie centrale délimitée par cette paroi tubulaire poreuse 12 à une source d'aspiration 13. Le diamètre de la paroi 12 doit être choisi pour se trouver essentiellement à l'intérieur de la limite entre la phase de densité plus élevée ou de particules en suspension et la phase de densité plus faible. De ce fait, le rôle de la paroi tubulaire poreuse 12 est essentiellement de répartir l'aspiration sur toute la hauteur de l'enceinte tronconique 10, donc sur toute la hauteur de l'écoulement cyclonique.

Comme dans un cyclone classique, la phase de densité plus élevée est récupérée par un collecteur 14 situé à la périphérie de la petite base de l'enceinte tronconique 10. Divers fluides peuvent être traités à l'aide de ce mode de mise en oeuvre du procédé selon l'invention. On peut citer le cas de la séparation de liquides non miscibles tels que l'eau et l'huile, on pourrait également traiter par ce mode de mise en oeuvre des gaz contenant des particules en suspension, tels que des gaz d'échappements de moteurs diesels contenant beaucoup de suie. Le gain d'espace et la séparation plus rapide résultant du procédé selon l'invention sont particulièrement intéressants dans le cas où l'on veut traiter les gaz d'échappements émis par les véhicules automobiles.

Bien entendu, dans des applications où de plus faibles débits sont nécessaires, au lieu de faire tourner l'écoulement sous forme de cyclone en vue d'engendrer le champ de force centrifuge apte à séparer les phases de densités différentes, on peut alimenter un canal circulaire du liquide à séparer au débit choisi, par lui-même incapable d'engendrer des forces centrifuges aptes à séparer les différentes phases et créer le champ de force centrifuge en faisant tourner le canal à une vitesse angulaire apte à créer la force centrifuge nécessaire.

Les exemples d'application du procédé selon l'invention mentionnés dans la description qui précède ne sont évidemment pas limitatifs quant aux applications possibles non mentionnées ici.

## Revendications

1. Procédé de séparation d'un fluide comprenant des phases de densités différentes ou des particules en suspension, à l'exception du sang et de tout liquide contenant des cellules humaines selon lequel, on forme un écoulement de ce fluide et on soumet cet écoulement à une force transversale à la direction dudit écoulement pour faire sédimenter la phase de densité plus élevée ou les particules, **caractérisé en ce que** l'on prélève en continu l'une desdites phases au fur et à mesure qu'elle se forme sur un portion au moins de la longueur dudit écoulement.

2. Procédé selon la revendication 1 selon lequel on forme un écoulement aussi laminaire que possible.

3. Procédé de séparation selon l'une des revendications précédentes , consistant à former un écoulement dudit fluide en lui donnant une trajectoire circulaire, à lui appliquer une force centrifuge en faisant tourner ladite trajectoire autour d'un axe passant par son centre pour faire sédimenter ladite phase de densité plus élevée ou lesdites particules selon une direction transversale à ladite trajectoire et à prélever en continu la phase de densité plus faible sur une portion au moins de la longueur du bord interne dudit écoulement.

4. Procédé selon la revendication 3, selon lequel on prélève ladite phase de densité plus faible en reliant ladite portion de la longueur du bord interne de la trajectoire circulaire dudit écoulement à une source d'aspiration.

5. Procédé selon la revendication 4, selon lequel on répartit l'aspiration de ladite source en une pluralité d'endroits du bord interne de ladite trajectoire.

6. Procédé selon l'une des revendications précédentes, selon lequel on dimensionne la longueur de ladite portion du bord interne ou du bord supérieur dudit écoulement suivant que la force appliquée est une force centrifuge ou de gravitation, pour prélever la quasi totalité de ladite phase de densité plus faible.

7. Procédé selon l'une des revendications précédentes, selon lequel on prélève la phase de densité plus élevée à proximité du bord externe dudit écoulement dans une zone située en aval de ladite portion du bord interne dudit écoulement.

8. Procédé selon l'une des revendications précédentes, selon lequel on forme un cyclone avec ledit fluide à séparer dans lequel on dispose, concentriquement à son axe de rotation et à l'intérieur de la zone annulaire contenant la phase de densité plus élevée dudit fluide, une paroi tubulaire poreuse et on crée une dépression à l'intérieur de la paroi tubulaire pour aspirer la phase légère dudit fluide sur toute la hauteur de la face interne de ladite paroi tubulaire.

9. Procédé selon l'une des revendications 1 et 2, selon lequel on forme un écoulement d'un liquide à séparer à une pression supérieure à la pression atmosphérique le long d'un canal incliné et on ménage une pluralité d'ouvertures réparties le long de la paroi supérieure dudit canal pour permettre à la phase de densité plus faible dudit liquide de sortir dudit canal au fur et à mesure de la sédimentation de la phase de densité plus élevée de ce liquide.

10. Procédé selon l'une des revendications 1 et 2, selon lequel on verse un liquide à séparer dans un bassin de décantation dont le fond présente des moyens pour collecter et évacuer la phase de densité plus élevée dudit liquide et on forme à la surface dudit bassin un réseau de drainage pour prélever la phase de densité plus faible dudit liquide au fur et à mesure de sa séparation de ladite phase de densité plus élevée.
